## Europäisches Patentamt
## European Patent Office
## Office européen des brevets

(19)

(11) Numéro de publication: **0 152 331**
**B1**

(12) # FASCICULE DE BREVET EUROPÉEN

(45) Date de publication du fascicule du brevet:
13.01.88

(51) Int. Cl.⁴: **G 06 F 7/50**

(21) Numéro de dépôt: **85400148.4**

(22) Date de dépôt: **29.01.85**

(54) Unité arithmétique et logique avec indicateur de débordement.

(30) Priorité: **03.02.84 FR 8401694**

(43) Date de publication de la demande:
**21.08.85 Bulletin 85/34**

(45) Mention de la délivrance du brevet:
**13.01.88 Bulletin 88/2**

(84) Etats contractants désignés:
**DE FR GB IT NL**

(56) Documents cité:
**IBM TECHNICAL DISCLOSURE BULLETIN, vol. 19, no. 8, janvier 1977, pages 3135-3136, New York, US; D.G. EAST et al.: "Overflow indication in two's complement arithmetic"**

(73) Titulaire: **THOMSON SEMICONDUCTEURS, 101, bld Murat, F-75016 - Paris (FR)**

(72) Inventeur: **Picco, André, THOMSON- CSF SCPI 173, bld Haussmann, F-75379 Paris Cedex 08 (FR)**

(74) Mandataire: **Guérin, Michel, THOMSON- CSF SCPI 19, avenue de Messine, F-75008 Paris (FR)**

LIBER, STOCKHOLM 1988

## Description

La présente invention concerne une unité arithmétique et logique telle que celles que l'on utilise das les microproceseurs ou d'autres circuits de traitement de sigr aux binaires.

Une unité arithmétique et logique est destinée à recevoir deux nombres binaires à plusieurs chiffres et à effectuer sur ces nombres des opérations simples de type arithmétique (addition des deux nombres, soustraction) ou logique (complémentation, fonction OU etc...). Elle est constituée par une succession de cellules d'aiguillages recevant chacune un chiffre binaire (bit) de l'un des nombres à traiter et un chiffre binaire (bit) de l'autre nombre; des conducteurs de commande, par exemple au nombre de huit, commandent les cellules d'aiguillages selon la fonction arithmétique ou logique à réaliser, de manière à aiguiller sur la sortie de chaque cellule l'un ou l'autre des chiffres binaires, ou leur complément, ou encore un bit "zéro" ou "un", selon la fonction à réaliser.

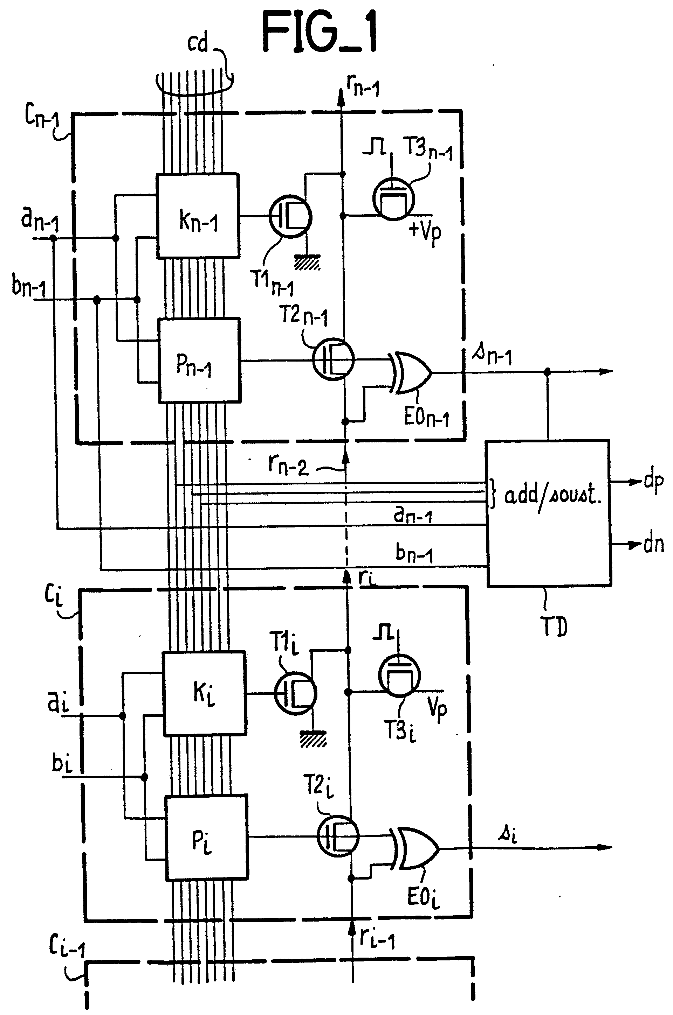

Un exemple de constitution d'une cellule arithmétique et logique (UAL) est représenté à la figure 1.

L'UAL comporte une succession de n cellules $C_0$ à $C_{n-1}$ pour traiter des nombres A et B de n bits chacun, $a_0$ à $a_{n-1}$ et $b_0$ à $b_{n-1}$, les bits de poids le plus fort $a_{n-1}$ et $b_{n-1}$, traités dans la celule de rang n-1, étant les bits de signe des nombres A et B.

Les bits de rang i, $a_i$ et $b_i$ respectivement, sont appliqués à l'entrée de la cellule $C_i$ de rang i.

Chaque cellule $C_i$ comprend deux éléments d'aiguillage $K_i$ et $P_i$ recevant chacun le bit $a_i$ et le bit $b_i$ et éventuellement leurs compléments $\bar{a}_i$ et $\bar{b}_i$, si ces compléments ne sont pas générés à l'intérieur même des éléments.

Les éléments $K_i$ et $P_i$ des diverses cellules sont tous commandés simultanément par des conducteurs de commande communs, par exemple au nombre de huit regroupés dans un bus de commande désigné par cd. L'état des signaux sur les divers conducteurs de commande définit la fonction arithmétique ou logique réalisée par l'UAL, et cette fonction se traduit par l'apparition en sortie de chaque élément d'aiguillage d'un signal qui peut être $a_1$ ou $b_1$ ou $\bar{a}_i$ ou $\bar{b}_i$ ou 0 ou 1.

Chaque cellule $C_i$ comporte, outre les entrées pour les nombres $a_i$ et $b_i$, une entrée de retenue désignée par $r_{i-1}$, reliée à la sortie de retenue, également désignée par $r_{i-1}$, de la cellule de rang immédiatement précédent $C_{i-1}$.

La cellule $C_i$ comporte enfin une sortie de résultat $s_i$ et une sortie de retenue $r_i$ destinée a être reliée à l'entrée de la cellule de rang suivant $C_{i-1}$.

Dans l'exemple représenté, la sortie de l'élément d'aiguillage $K_i$ commande un transistor à effet de champ $T1_i$ connecté entre la sortie de retenue $r_i$ et une mase (niveau logique 0). La sortie de l'élément d'aiguillage $P_i$ est reliée d'une part à la grille de commande d'un transistor $T2_i$ relié entre l'entrée de retenue ($r_{i-1}$) et la sortie de

retenue ($r_i$). Par ailleurs, la sortie de l'élément d'aiguillage $P_i$ est reliée à une entrée d'une porte OU-exclusif $EO_i$ dont une autre entrée est reliée à l'entrée de retenue $r_{i-1}$ et dont la sortie constitue la sortie de résultat $s_i$ de la cellule $C_i$.

Enfin, un transistor $T3_i$ relié entre la sortie de retenue $r_i$ et une tension d'alimentation $V_p$ sert a assurer une précharge du circuit dans une première phase de fonctionnement de l'UAL pendant laquelle ce transistor est rendu conducteur.

On cherche en général à savoir, lorsque l'UAL fonctionne en additionneur ou soustracteur, s'il n'y a pas dépassement de la capacité d'addition ou soustraction de l'UAL. En effet, les nombres A et B d'entrée sont des nombre signés dont le bit de poids fort ($a_{n-1}$ ou $b_{n-1}$) représente le signe, positif s'il est nul, négatif s'il est égal a 1; la sortie de l'UAL est également un nombre signé dont le bit de poids fort $s_{n-1}$ (sortie de la cellule $C_{n-1}$ de rang le plus fort) représente le signe du résultat de l'addition ou la soustraction. Il se peut que l'addition de deux nombres positifs donne un résultat positif supérieur ou égal à $2^{n-1}$, auquel cas le bit de signe $s_{n-1}$ deviendra égal à 1, ce qui sera interprété comme un résultat négatif: il y a dépasement de capacité de l'UAL, qu'on appelle débordement positif. Il se peut aussi que l'addition de deux nombres négatifs donne un résultat négatif inférieur à $-2^{n-1}$, auquel cas le bit de signe $s_{n-1}$ deviendra égal à 0, et le résultat fourni par l'UAL, interprété comme un nombre positif, sera évidemment faux: il y a encore dépasement de capacité, qu'on appellera débordement négatif.

De même, un débordement positif est possible en cas de soustraction A-B où A est positif et B négatif et un débordement négatif est possible en cas de soustraction A-B ou A est négatif et B positif.

Les unités arithmétiques et logiques sont donc généralement pourvues d'un circuit de test de débordement, représenté sous la référence générale TD, qui élabore un signal de débordement positif dp et un signal de débordement négatif dn.

Ces signaux sont utilisées par le processeur ou microproceseur dont l'UAL forme le noyau; par exemple, ces signaux sont enregistrés à des positions spécifiques d'un registre d'état comportant par ailleurs d'autres indications sur l'état du proceseur.

En pratiquer si l'on examine le détail du circuit de test de débordement, on s'aperçoit qu'il est usuellement élaboré à partir des remarques suivantesr $a_{n-1}$, $b_{n-1}$, et $s_{n-1}$ étant les bits de signe des nombres A et B et du résultat S de l'addition ou de la soustraction de A et B:

1. en mode d'addition

a) si A et B sont positifs ($a_{n-1} = b_{n-1} = 0$) et si on trouve S négatif ($s_{n-1} = 1$), il y a débordement positif: dp = 1; on peut donc écrire l'équation logique:

$$dp = \bar{a}_{n-1}\,\bar{b}_{n-1}\,s_{n-1} \quad (1)$$

b) si A et B sont négatifs : ($a_{n-1} = b_{n-1} = 1$) et si on trouve S positif ($\emptyset\ s_{n-1} = 0$), il y a débordement négatif: dn = 1 ; on peut écrire l'équation logique :

$$dn = \bar{a}_{n-1}\ \bar{b}_{n-1}\ \bar{\ }s_{n-1}\ (2)$$

2. en mode de soustraction A-B

a) si A est positif et B négatif ($a_{n-1} = 0$; $b_{n-1} = 1$) et si on trouve S négatif ($s_{n-1} = 1$), il y a débordement positif: dp = 1; on peut écrire l'équation logique:

$$dp = \bar{\ }a_{n-1}\ b_{n-1}\ s_{n-1}\ (3)$$

b) si A est négatif et B positif ($a_{n-1} = 1$; $b_{n-1} = 0$) et si on trouve S positif ($s_{n-1} = 0$), il y a débordement négatif dn = 1; on peut écrire l'équation logique:

$$dn = a_{n-1}\ \bar{\ }b_{n-1}\ \bar{\ }s_{n-1}\ (4)$$

On remarque que les équations logiques (1) et (3) ne sont pas identiques, de même que les équations (2) et (4). Il est donc a priori nécesaire d'établir des signaux de débordement séparément pour le cas où l'UAL effectue une addition, et pour le cas où elle effectue une soustraction. Le circuit de test TD doit donc recevoir:

- le bit de signe $a_{n-1}$ de A
- le bit de signe $b_{n-1}$ de B
- le bit de signe $s_{n-1}$ du résultat S
- une indication sur le mode de travail, addition ou soustractionr de l'UAL.

Cette dernière indication provient d'un ou plusieurs conducteurs du bus de commande cd de l'UAL.

On pourra se reporter par ailleurs à un autre exemple d'art antérieur constitué par le circuit de test de débordement pour fournir un signal de débordement positif et un signal de débordement négatif décrit dans IBM, TDB, vol. 19, n° 8, janv. 1977, pages 3135-6.

Outre qu'il faut prévoir d'amener au circuit de test des signaux venant des bus de commande de l'UAL, il est donc nécessaire de prévoir un circuit logique à plusieurs niveaux de portes: un premier niveau d'inverseurs pour réaliser les compléments $\bar{\ }a_{n-1}$, $\bar{\ }b_{n-1}$, $\bar{\ }s_{n-1}$, quatre portes à trois entrées au moins pour réaliser les divers produits apparaîsant das les équations logiques (1) à (4) et des portes pour sélectionner les produits adéquats en fonction de l'état du bus de commade cd.

Pour réduire le nombre de portes nécesaires et surtout le nombre d'étages successifs de portes afin d'accélérer l'obtention de l'information de débordement, la présente invention propose une unité arithmétique et logique ayant un circuit de test de débordement qui possède trois entrées reliées respectivement à l'entrée de retenue $r_{n-2}$ de la cellule de rang le plus élevé $C_{n-1}$ de l'unité arithmétique et logique, à la sortie $r_{n-1}$ de retenue

de cette cellule, et enfin à la sortie de résultat $s_{n-1}$ de cette cellule pour établir les produits logiques suivants:

$$dp = r_{n-2} \cdot s_{n-1} \cdot \bar{r}_{n-1}\ \text{et}$$

$$dn = \bar{r}_{n-2} \cdot \bar{s}_{n-1} \cdot r_{n-1}\ .$$

Ce circuit comporte essentiellement, outre des inverseurs pour établir le complément des signaux appliqués à ces entrées, une seule porte à trois entrées pour chaque information de débordement à établir (c'est-à-dire deux portes s'il faut une information de débordement positif et une information de débordement négatif).

D'autres caractéristiques et avantages de l'invention apparaîtront à la lecture de la description détaillée qui suit et qui est faite en référence aux dessins annexés dans lesquels:

- la figure 1 déjà décrite représente une unité arithmétique et logique de la technique antérieurer,
- la figure 2 représente l'unité arithmétique et logique selon l'invention.

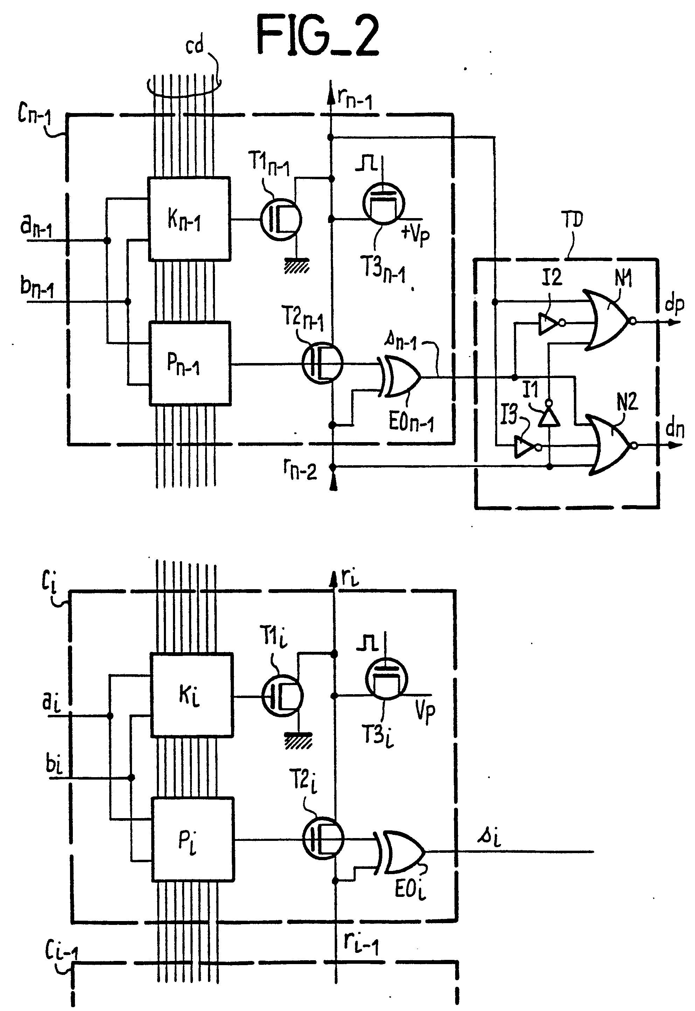

Sur la figure 2, les mêmes références représentent les mêmes éléments qu'à la figure 1 et on ne reviendra pas sur leur description. La structure de l'UAL représentée ne constitue d'ailleurs qu'un exemple de réalisation parmi d'autres possibles.

Le circuit de test de débordement TD de la figure 2 ne reçoit pas de conducteur issu du bus de commande cd indiquant la fonction accomplie par l'UAL. Par conséquent, le circuit de test de débordement ne reçoit pas d'information directe sur le fait que l'UAL effectue une addition plutôt qu'une soustraction.

Le circuit TD ne reçoit que trois signaux d'entrée qui sont respectivement le signal présent sur l'entrée de retenue $r_{n-2}$ de la dernière cellule $C_{n-1}$ de l'UAL et les signaux présents sur la sortie de retenue $r_{n-1}$ et la sortie de résultat $s_{n-1}$ de cette même cellule (dont on rappelle qu'elle reçoit les bits de signe $a_{n-1}$ et $b_{n-1}$ des nombres A et B à additionner ou soustraire).

Le circuit TD fournit encore un signal de débordement positif dp et un signal de débordement négatif dn.

Ces signaux de sortie du circuit TD sont des signaux logiques reliés aux signaux logiques d'entrée par les équations suivantes:

$$dp = r_{n-2} \cdot s_{n-1} \cdot \bar{\ }r_{n-1}\ (5)$$

$$\text{et } dn = \bar{\ }r_{n-2} \cdot \bar{\ }s_{n-1} \cdot r_{n-1}\ (6)$$

A cet effetr le circuit TD peut comprendre trois inverseurs I1, I2, I3, fournissat respectivement les compléments de $r_{n-2}$, $s_{n-1}$ et $r_{n-1}$, et deux portes à trois entrées pour établir les produits des équations (5) et (6).

Sur la figure 2, les portes sont des portes NOR N1 et N2, la porte N1 reçoit $\bar{\ }r_{n-2}$, $\bar{\ }s_{n-1}$ et $r_{n-1}$ et fournit dp;

la porte N2 reçoit $r_{n-2}$, $s_{n-1}$ et $\bar{\ }r_{n-1}$ et fournit dn.

Le circuit TD est donc très simple et ne comporte qu'un étage de portes à trois entrées, fournisant tres rapidement les indications de dépassement dp et dn.

L'élaboration des signaux dp et dn ne dépend plus de l'opeiation (addition ou soustraction) effectuée.

Les cas de dépassement de capacité sont en effet les suivats:

1. addition

a) A et B étant positifs, on trouve quand même un résultat négatif:

$$a_{n-1} = 0, b_{n-1} = 0, s_{n-1} = 1$$

ceci n'est possible que si $r_{n-2}$ et $r_{n-1} = 0$

on aboutit à l'équation logique suivante:

$$dp = r_{n-2}\, s_{n-1}\, \bar{r}_{n-1}\ (7)$$

b) A et B étant négatifs, on trouve quand même un résultat positf:

$$a_{n-1} = 1, b_{n-1} = 1, s_{n-1} = 0$$

ceci n'est possible que si $r_{n-2} = 0$ et $r_{n-1} = 1$

on aboutit à: $dn = \bar{r}_{n-2}\, \bar{s}_{n-1}\, r_{n-1}\ (8)$

2. soustraction A-B

a) A positif, B négatif, on trouve un résultat négatif:

$$a_{n-1} = 0, b_{n-1} = 1, s_{n-1} = 1$$

ceci n'est possible que si $r_{n-2} = 1$ et $r_{n-1} = 0$

on aboutit à $dp = r_{n-2}\, s_{n-1}\, \bar{r}_{n-1}$

b) A négatif, B positif, on trouve un résultat positif:

$$a_{n-1} = 1, b_{n-1} = 0, s_{n-1} = 0$$

ceci n'est possible que si $r_{n-2} = 0$ et $r_{n-1} = 1$

on aboutit à $dn = \bar{r}_{n-2}\, \bar{s}_{n-1}\, r_{n-1}\ (10)$

On vérifie qu'il y a identité des équations logiques (7) et (9) d'une part (débordement positif) et (8) et (10) d'autre part (débordement négatif). Le test de débordement n'a donc pas à faire intervenir le fait que l'UAL effectue une addition ou une soustraction.

## Revendications

1. Unité arithmétique de logique comportant une série de cellules d'aiguillage ($C_i$) commandées simultanément pour définir un mode de fonctionnement arithmétique ou logique déterminé de l'unité, une cellule de rang i ($C_i$) ayant une entrée pour recevoir un bit ($a_i$) de rang i d'un premier nombre A, une entrée pour recevoir un bit de même rang i ($b_i$) d'un second nombre B, et une entrée de retenue ($r_{i-1}$), la cellule ayant une sortie de résultat ($s_i$) et une sortie de retenue ($r_i$), cette dernière étant reliée à l'entrée de retenue de la cellule ($C_{i+1}$) de rang immédiatement supérieur ($i+1$), la cellule de rang le plus élevé ($C_{n-1}$) recevant sur ses entrées un bit de signe ($a_{n-1}$) du premier nombre A et un bit de signe ($b_{n-1}$) du second nombre B, et un circuit de test de débordement (TD) étant prévu pour fournir un signal de débordement positif (dp) et un signal de débordement négatif (dn), caractérisée en ce que le circuit de test de débordement comporte trois entrées reliées respectivement à l'entrée de retenue ($r_{n-2}$) de la cellule de rang le plus élevé ($C_{n-1}$), et aux sorties de retenue ($r_{n-1}$) et de résultat ($s_{n-1}$) de cette même cellule, ce circuit étant apte à établir les produits logiques suivants:

$$dp = r_{n-2}\cdot s_{n-1}\cdot \bar{r}_{n-1}\ \text{et}$$

$$dn = \bar{r}_{n-2}\cdot \bar{s}_{n-1}\cdot r_{n-1}$$

2. Unité arithmétique et logique selon la revendication 1, caractérisée en ce que le circuit de test de débordement comporte deux portes à trois entrées (N1, N2) et trois inverseurs (I1, I2, I3), l'une des portes délivrant à sa sortie le produit dp, l'autre porte délivrant à la sortie le produit dn.

## Patentansprüche

1. Arithmetisch-logische Einheit mit einer Reihe von Weichenzellen ($C_i$), die simultan gesteuert werden, um eine bestimmte arithmetische oder logische Betriebsweise der Einheit zu definieren, wobei die Zelle ($C_i$) des Rangs i einen Eingang zum Empfang eines Bits ($a_i$) des Rangs i einer ersten Zahl A, einen Eingang zum Empfang eines Bits ($b_i$) desselben Rangs i einer zweiten Zahl B und einen Übertragseingang ($r_{i-1}$) einen Ausgang ($s_i$) für das Ergebnis und einen Ausgang ($r_i$) für den Übertrag besitzt, wobei letzterer an den Übertragseingang der Zelle ($C_{i+1}$) des nächsthöheren Rangs ($i+1$) angeschlossen ist, wobei die höchstrangige Zelle ($C_{n-1}$) über einen ihrer Eingänge ein Vorzeichenbit ($a_{n-1}$) der ersten Zahl A und ein Vorzeichenbit ($b_{n-1}$) der zweiten Zahl B zugeführt erhält und ein Überlauftestkreis (TD) vorgesehen ist, um ein positives Überlaufsignal (dp) und ein negatives Überlaufsignal (dn) zu liefern, dadurch gekennzeichnet, daß der Überlauftestkreis drei Eingänge aufweist, die an den Übertragseingang ($r_{n-2}$) der höchstrangigen Zelle ($C_{n-1}$) bzw. an den Übertragsausgang ($r_{n-1}$) bzw. an den Ergebnisausgang ($s_{n-1}$) dieser gleichen Zelle angeschlossen sind, und daß dieser Kreis folgende logische Produkte zu bilden vermag:

$dp = r_{n-2} \cdot s_{n-1} \cdot \bar{r}_{n-1}$ und

$dn = \bar{r}_{n-2} \cdot \bar{s}_{n-1} \cdot r_{n-1}$

2. Arithmetische und logische Einheit nach Anspruch 1, dadurch gekennzeichnet, daß der Überlauftestkreis zwei Tore (N1, N2) mit je drei Eingängen und drei Inverter (I1, I2, I3) aufweist, wobei eines der Tore am Ausgang das Produkt dp und das andere am Ausgang das Produkt dn liefert.

## Claims

1. An arithmetic logic unit comprising a series of switching cells ($C_i$), which are controlled simultaneously in order to define a predetermined arithmetic or logic operation mode of the unit, a cell ($C_i$) of the order i including an input for receiving the bit ($a_i$) of order i of a first number A, an input for receiving the bit ($b_i$) of the same order i of a second number B, and a carry-over input ($r_{i-1}$), the cell including further a result output ($s_i$) and a carry-over output ($r_i$), the latter being connected to the carry-over input of the cell ($C_{i+1}$) of the next higher order (i+1), the cell ($C_{n-1}$) of the highest order receiving via its inputs a sign bit ($a_{n-1}$) of the first number A and a sign bit ($b_{n-1}$) of the second number B, and an overflow testing circuit (TD) being provided which supplies a positive overflow signal (dp) and a negative overflow signal (dn), characterized in that the overflow testing circuit comprises three inputs respectively connected to the carry-over input ($r_{n-2}$) of the highest order cell ($C_{n-1}$) and to the carry-over ($r_{n-1}$) and result outputs ($s_{n-1}$) of this same cell, this circuit being capable of establishing the following logic products:

$dp = r_{n-2} \cdot s_{n-1} \cdot \bar{r}_{n-1}$ and

$dn = \bar{r}_{n-2} \cdot \bar{s}_{n-1} \cdot r_{n-1}$

2. An arithmetic and logic unit according to claim 1, characterized in that the overflow testing circuit comprises two gates (N1, N2) with three inputs each, and three inverters (I1, I2, I3), one of the gates supplying at its output the product dp and the other supplying at its output the product dn.

**0 152 331**

# FIG_1

# FIG_2